# EUROPEAN PATENT SPECIFICATION

(11) **EP 0 400 479 B1**
(45) Date of publication and mention of the grant of the patent: **01.02.1995**
(21) Application number: 90109861.6
(22) Date of filing: 23.05.1990
(51) Int. Cl.: C08F 279/02, C08F 279/04, C08F 2/02

(54) **Process for the continuous bulk production of high impact vinylaromatic (co)polymers**
Verfahren zur kontinuierlichen Masseherstellung von vinylaromatischen (Co)polymeren mit hoher Schlagzähigkeit
Procédé pour la production en masse et en continu de polymères ou copolymères vinylaromatiques à haute résistance à l'impact

(30) Priority: 24.05.1989 IT 2062389
(43) Date of publication of application: 05.12.1990
(73) Proprietor: ENICHEM S.p.A., 20124 Milano (IT)
(72) Inventor: Buonerba, Claudio, I-46100 Mantova (IT); Matarrese, Savino, Dr., I-37138 Verona (IT); Balestri, Franco, I-46100 Mantova (IT); Borghi, Italo, Dr., I-44100 Ferrara (IT)
(74) Representative: Weinhold, Peter, Dr.

(56) References cited:
- FR-A- 2 352 838
- US-A- 3 945 976
- US-A- 3 981 944
- US-A- 4 325 915
- US-A- 4 640 959
- WPIL, FILE SUPPLIER, AN=88-180118, Derwent Publications Ltd, London, GB;& JP-A-63 118 315

## Description

The present invention relates to a process for the continuous mass production of high impact vinylaromatic (co)polymers.

More specifically, this invention relates to a process for the continuous bulk production of high impact (co)polymers based on vinylaromatic monomers, rubber and, optionally, certain comonomers.

It is well known that the impact resistance properties of polystyrene can be improved by mixing it with a rubbery material. To this end the two components can be mixed mechanically or, more favourably, the styrene polymerization is carried out in the presence of the rubbery material.

In the latter case the rubbery material generally is dissolved in the styrene monomer and the resulting solution is polymerized continuously or discontinuously in bulk, in solution or in a combined bulk/suspension polymerization process.

Immediately after the beginning of the polymerization reaction the solution of the rubbery material in the styrene monomer separates into two phases. One of them, i.e., the solution of the rubber in the styrene monomer, initially forms the continuous phase while the other one, i.e., the solution of polystyrene in its own monomer, becomes dispersed in the continuous phase in the form of droplets. By increasing the conversion the quantity of the second phase increases at the expense of the first one; as soon as the quantity of formed polystyrene exceeds the quantity of employed rubber, a phase exchange, which generally is called phase inversion, takes place.

When this inversion takes place, drops of the rubbery material solution form in the polystyrene solution; said drops of rubbery material solution, however, in turn include small droplets of what has become the continuous polystyrenic phase. At the same time, a grafting of the rubber by the polystyrene chains takes place during the polymerization.

Usually the polymerization is carried out in several stages. In the first polymerization stage (called prepolymerization) the rubber solution in styrene is polymerized until a conversion above the phase inversion point is reached; thereafter the polymerization is continued up to the desired styrene conversion.

The continuous bulk polymerization is described, e.g., in US-A-2694692, 3243481 and 3658946. The combined discontinuous bulk/suspension polymerization is described, for example, in US-A-3428712.

It is well known that the properties of the styrenic polymers, and in particular their stress crack resistance, especially when they come in contact with fatty substances, can be improved by incorporating small amounts of a vinylcyanide in the polymer.

It is also known that the improved impact resistance properties of the styrenic polymers can be influenced and varied during the polymerization by varying the degree of grafting of the polystyrene chains onto the rubber.

Several attempts have been made for this purpose, but none of them has allowed to realize the grafting up to the desired degree under conditions which are acceptable from an industrial point of view. One approach to increase the degree of grafting of the rubber consists in using block-rubbers of the A-B, A-B-A, or B-A-B type (in which A is a styrene block and B is a butadiene block) or in using star-shaped block copolymers (see DE-A-2646508, 2646509, 2717777 and 2504118).

However, this approach is scarcely attractive from an industrial point of view because of the particular operative conditions necessary for those types of rubbers.

It also is possible to effect the bonding between the rubber and the thermoplastic component in situ, by carrying out the polymerization in the presence of an initiator, usually a conventional peroxide. In this case, however, problems can arrise from the technical difficulties associated with the polymerization, such as insufficient removal of the heat of polymerization, the excessive viscosity of the solution and the premature crosslinking of the rubber at high temperatures. Thus, only low concentrations can be used. Alternatively, if conventional concentrations of catalyst are employed, only low temperatures can be used, with consequent low degrees of grafting and insufficient mechanical properties.

US-A-4282334 suggests, in example 1, to increase the degree of grafting by carrying out the polymerization, in the initial stage, under adiabatic conditions. Even if this method allows to reach a satisfactory degree of grafting, the realization of said process on an industrial scale involves unsurmountable problems, because the reaction becomes uncontrollable.

The same US-A suggests to obtain a high degree of grafting under isothermal conditions in a tubular reactor and in the presence of a catalyst at high temperature. However, tests carried out by the applicant have shown that also this process is not free of problems, because of the formation of crosslinked polymer, above all at the top of the reactor, so that the reactor is completely obstructed after 1 to 2 days. These problems may be observed particularly in the case of the copolymerization of styrene with a vinyl-cyanide monomer.

The present invention allows to overcome all of the problems associated with the continuous bulk polymerization of a vinylaromatic monomer carried out in an agitated plug-flow reactor, also in the case of copolymerization with a comonomer such as a vinyl-cyanide monomer.

The present invention provides a continuous, bulk or solution process for the production of high impact styrene polymers or copolymers, which process is realisable and reproducible from an industrial point of view and permits to effect a high degree of grafting of the (co)polymer on the rubber.

The process of the present invention for the continuous bulk production of vinylaromatic (co)polymers including a vinylaromatic monomer, rubber and, optionally, a comonomer selected from acrylonitrite, methacrylonitrite, acrylicacid, methacrylic acid and C₁₋₈ alkyl on cycloalkyl esters of said acids comprises:
a) mixing, in one or more mixers and at a temperature below 100°C, vinylaromatic monomer, rubber, catalyst (in an amount not exceeding 0.1% by weight based on the monomers), the above comonomer, if present, inert solvent (in an amount not exceeding 20% by weight based on the total mixture) and the (co)polymer formed by said monomers (in an amount not exceeding 10% by weight based on the total mixture);
b) feeding the solution obtained in step a) into the head of an agitated vertical tubular plug-flow reactor which is divided into three consecutive zones heated at different temperatures between 100° and 150°C, the flow rate being higher than that of the mixture coming out of the reactor;
c) recycling the excess of the feeding solution coming out of the vertical reactor of step (b) to the mixer;
d) injecting the solvent, in an amount not exceeding 5% by weight based on the solution, in the top of the vertical reactor;
e) keeping the solution obtained from the first zone of the vertical reactor, for a time sufficient to halve the catalyst lifetime at the temperature of said first zone; and
f) continuing the polymerization in the following zones of the vertical reactor until the solution coming out of the third zone of the reactor has a solids content of at least 40% by weight.

Preferably the polymerization is carried out in one or more consecutive agitated tubular plug-flow reactors until a solids content of at least 70% by weight is reached, whereafter the obtained polymerization mixture is subjected to devolatilization.

The solution of vinylaromatic monomer, rubber, catalyst, optional comonomer, inert solvent and (co)polymer can be prepared in a single mixer or, preferably, in two separate mixers. In the first mixer, kept at a temperature not exceeding 100°C, vinylaromatic monomer, rubber and inert solvent are mixed; in the second mixer, not heated, the catalyst and the comonomer, if present, are added. The crucial conditions in the preparation stage of the solution are the temperature (which must not exceed 100°C) and the catalyst addition which is to be effected immediately before the feeding of the solution to the vertical reactor, in order to avoid significant polymer formation.

In the only mixer or in the first mixer, if two mixers are employed, small amounts of copolymer are present. Said amounts, however, do not exceed 10% by weight based on the solution fed.

The above polymerization conditions, in particular the time and the temperature at which the mixture is kept in the first zone of the reactor, are essential for the obtainment of a high gel content resulting from the grafting of the styrenic (co)polymer onto the rubber.

Examples of rubbers which can be used in the process of the present invention are natural or synthetic rubbers usually employed for the production of styrenic high impact polymers. Particularly suitable rubbers are the homopolymers and copolymers of conjugated dienes having 4 to 6 carbon atoms, such as polybutadiene and polyisoprene, and butadiene/isoprene copolymers with styrene and/or other comonomers. Said copolymers preferably have a transition temperature of the second order (Tg) lower than -20°C. The rubbery copolymers of butadiene and/or isoprene may be random or block copolymers. Other rubbery components suitable for the process of the present invention are the rubbery ethylene-propylene copolymers and ethylene-propylene-diene terpolymers.

The preferred rubber is a homopolymer of a conjugated diene containing 4 to 6 carbon atoms, in particular polybutadiene having more than 25% cis configuration.

The elastomeric styrene-diene block copolymers and the styrene-diene graft-copolymers are equally suitable for the process of the present invention. The graft-copolymers contain said chains of polystyrene grafted onto a polydiene, preferably polybutadiene, as substrate. In the block copolymers the passage from one block to the other can take place suddenly or gradually. In particular, block copolymers of the A-B or A-B-A type can be employed, in which A is a polystyrene block homopolymer and B is a block polymer of a conjugated diene having from 4 to 6 carbon atoms, most preferred butadiene, and styrene with random monomer distribution. The rubbers can be employed one by one or mixed together. The employed rubbery component preferably does not contain more than 55% by weight of styrene homopolymer segments in block form.

According to the process of the present invention, the rubber is first dissolved in the styrene monomer and then the mixture is subjected to polymerization. Generally the rubber component is employed in amounts of from 1 to 20% by weight, preferably 2 to 15% by weight, based on the initial solution to be polymerized.

An inert solvent which acts as a diluent is added to the solution to be polymerized in an amount not exceeding 20%, preferably of from 5 to 10% by weight, based on the solution to be polymerized.

Examples of suitable inert solvents are aromatic hydrocarbons which are liquid at the polymerization temperature. Toluene, ethylbenzene, the xylenes and mixtures of said solvents, in any ratio, are preferred. Optionally auxiliary agents and additives, such as, e.g., antioxidants, stabilizers, lubricants and release agents, can be added to the solution to be polymerized.

The catalysts to be employed in the process of the present invention may be those which are usually employed in styrene polymerization. Examples thereof are radical initiators such as organic peroxides.

Specific examples of suitable initiators are: dibenzoyl peroxide, tert-butyl peroctoate, tert-butyl perbenzoate, di-tert-butyl peroxide, 1,1′-di-tert-butylperoxycyclohexane, and 1,1′-di-tert-butyl-peroxy-3,3,5-trimethyl cyclohexane.

Said catalysts are added in amounts not exceeding 0.1%, and in particular of from 0.005 and 0.05% by weight, based on the monomers.

Chain transfer agents may also be used.

Examples of suitable chain transfer agents are mercaptanes containing from 4 to 18 carbon atoms such as, e.g., n-butyl-mercaptane, n-octyl-mercaptane, tert-dodecyl-mercaptane and n-dodecylmercaptane. The amount of chain transfer agent, if used, usually ranges from 0.01 to 0.3% by weight based on the vinylaromatic monomer.

The vinylaromatic monomer employed in the process of the present invention includes first of all styrene, but styrenic monomers wherein one or more hydrogen atoms are replaced by alkyl, aryl, halogen and/or nitro can also be employed. Examples thereof are α-methyl-styrene; mono-, di-, tri-, tetra-, and penta-chloro styrene and the corresponding α-methyl styrenes such as ortho- and para-ethyl styrenes, ortho- and para-α-methyl-styrenes and mixtures thereof and/or with styrene.

The optional comonomer generally is employed in amounts of from 0 to 50% by weight, preferably 5 to 30%, based on the mixture of the monomers to be polymerized.

The polymerization is carried out in vertical tubular reactors wherein the length is a multiple of the diameter and in which the product is stirred only mildly. Generally the length/diameter ratio is at least 2, preferably of from 3 to 10.

An essential aspect of the process of the present invention is the way in which the process is carried out during the first phase, i.e., during the prepolymerization effected in the first stage of the tubular reactor. To obtain products having a high gel content, such as for example in the case of polybutadiene rubbers with a grafting ratio, expressed by gel%/fed rubber%, above 3, preferably of from 3.2 to 4.2, the monomer residence time in the first stage must be at least the time necessary to achieve the halving of the catalyst lifetime at the polymerization temperature.

The grafted rubber content, for the purpose of the present invention, means the constituent that is insoluble in toluene at room temperature (about 25°C).

The half-life values of the various catalysts at a given temperature may be found in the literature.

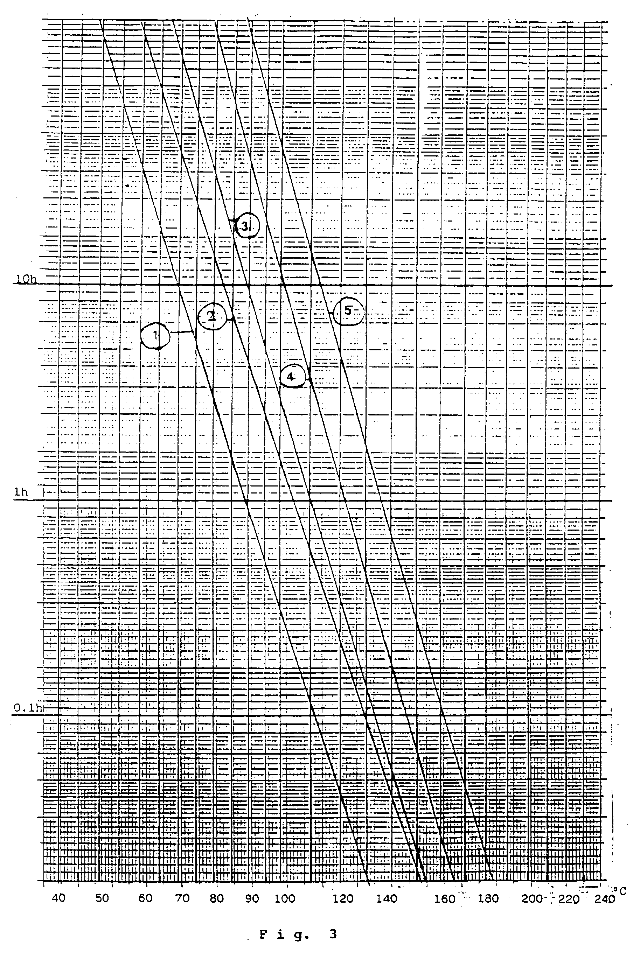

To give an example, Figure 3 shows the time/temperature relationship for the following catalysts:
1. tert-butyl peroxy-2-ethylhexanoate;
2. 1,1-di-tert-butylperoxy-3,3,5-trimethylcyclohexane;
3. 1,1'-di-tert-butylperoxycyclohexane;
4. tert-butyl-peroxybenzoate and
5. di-tert-butylperoxide.

In this first zone the prepolymerization of the monomer(s)-rubber mixture takes place until the phase inversion is obtained. Thereafter the polymerization is continued in the subsequent stages of the reactor until the solids content of the mixture coming out of the third stage of the reactor is at least 40% by weight.

In the tubular reactor, the temperature and the solids concentration rapidly increase from the inlet to the outlet point.

At the inlet point, the temperature and the solids content generally correspond to the values of the mixture fed from the mixer or the mixers, i.e., the temperature is about 95°C and the solids content is below 10% by weight and corresponds to the (co)polymer content resulting from the recycle of the tubular reactor head. At the outlet point the temperature generally is about 140-150°C and the solids content is at least 40% by weight of the total solution.

A further essential feature of the process of the present invention is that a small portion of the inert solvent employed as diluent for the monomer solution is sprinkled or injected, at room temperature, in the top of the vertical reactor in order to prevent monomer polymerization in said zone. The quantity of injected solvent does not exceed 5% by weight based on the monomer solution and it is preferred to inject it in coincidence of the rupture disk the reactor is preferably equipped with. This continuous washing operation, besides decreasing the reagent and catalyst concentration at the reactor head, keeps the rupture disk chamber cold. The solvent preferably flows in contact with the reactor walls and is recycled to the mixer. The employed solvent can be the pure product or, preferably, the solvent recovered by distillation from the polymerization bulk at the end of the process.

Moreover, in order to avoid that the polymerization bulk climbs up to the rupture disk chamber, nitrogen or any other inert gas under pressure is preferably blown into the zone below said rupture disk; the pressure of said gas usually is above 0.1 x 10⁵ Pa and particularly ranges from 0.2 x 10⁵ to 1 x 10⁵ Pa.

The injected nitrogen or other inert gas serves to form a gaseous film in contact with the head falange of the reactor, which film enhances the effect of the washing condensate.

The continuous washing with the inert solvent, combined with the presence of a gaseous film, allows to eliminate all the problems associated with the getting dirty of the top of the reactor and in particular of the rupture disk, even after several months of continuous operation.

During the polymerization, particularly during the preparation of the rubber-vinylaromatic monomer mixture, conventional additives can be added, such as antioxidants, UV-stabilizers, lubricants and fillers, in conventional quantities.

The polymerization mixture coming out of the tubular reactor can be passed to a conventional devolatilizer where it is freed from the non-reacted monomers and the solvent. Practically, it is preferred, before devolatilization, to increase the conversion in one or more consecutive, tubular reactors. It is particularly preferred to use one or more, preferably two, successive agitated vertical tubular reactors like the first one, in which the solids content, based on the vinylaromatic monomer, is raised to at least 70% by weight, whereafter the mixture is devolatilized.

Any thin film devolatilizer can be employed. An example thereof is described in EP-A-267025.

The advantage offered by the process of the present invention is that it allows to obtain high degrees of grafting on the rubber and a high grafting yield without any difficulty concerning heat removal, formation of incrustations on the walls and the top of the reactor and premature crosslinking.

The following examples are given for illustrative purposes.

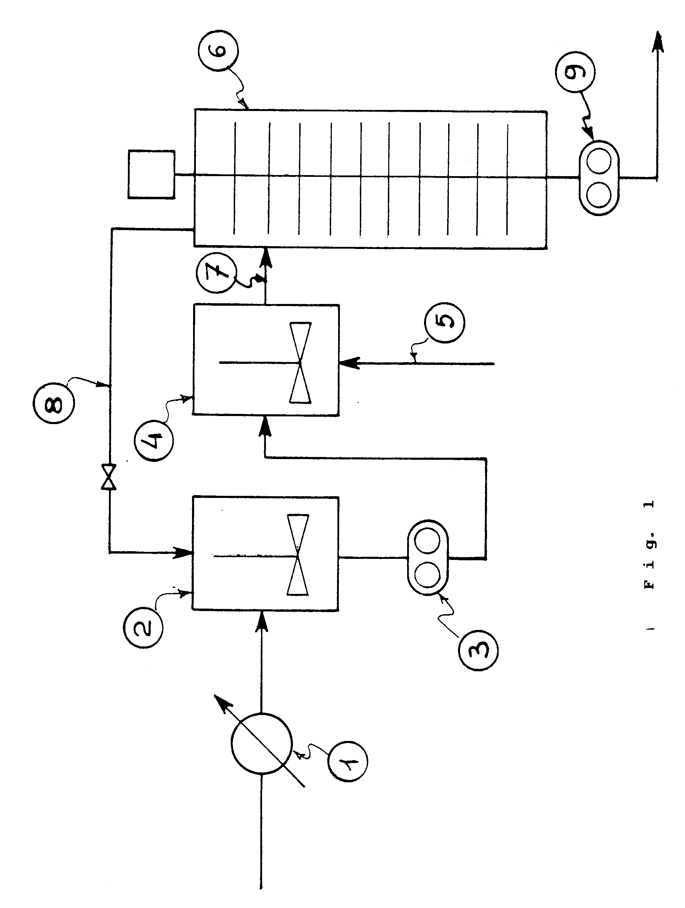

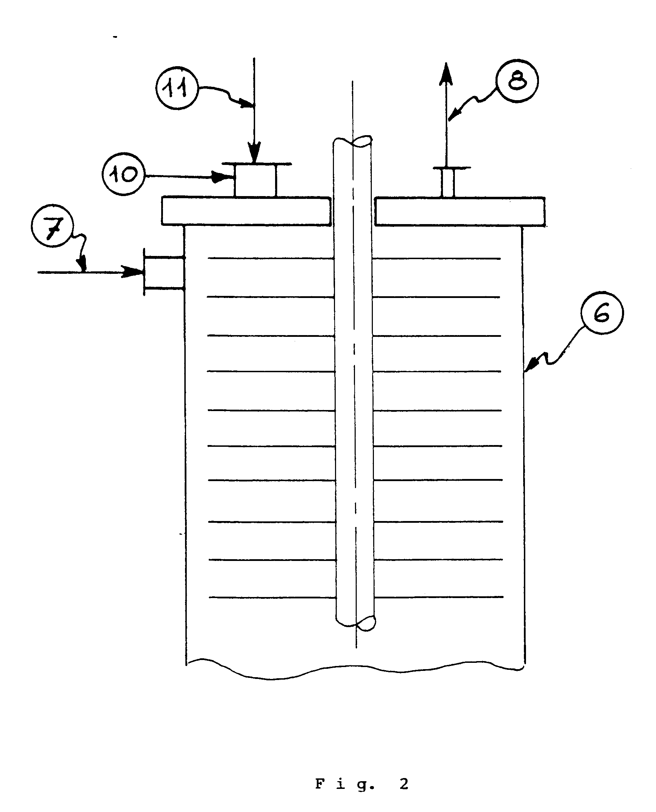

The examples refer to the figures of the enclosed drawings, in which Figure 1 represents the schematic view of the mixers and of the tubular reactor employed in the process of the present invention and Figure 2 represents an enlarged schematic view of the upper part of the tubular reactor of Figure 1.

In the examples all parts and percentages are given by weight if not indicated otherwise.

### EXAMPLE 1

A reaction solution comprising:
5.0 parts by weight of polybutadiene rubber of the medium cis type (BUNA HX529):
85.4 parts by weight of styrene
8.1 parts by weight of ethylbenzene
1.5 parts by weight of paraffin oil, and
0.1 parts by weight of a phenolic antioxidant (IRGANOX® 1076)
was fed continuously through a preheater (1), at a temperature of about 95°C and a flow rate of 1.33 l/h, into an agitated 1.25 l mixing reactor (2) of the CSTR type.

The reaction mixture coming from the head of the tubular reactor (6) through the pipe (8), was added to this solution in the mixing reactor (2) at a flow rate of 0.27 l/h.

The resulting solution was fed, through a gear pump (3) and at a flow rate of 0.160 l/h, into a second agitated mixing reactor (4) of the CSTR type and having a volume of 0.125 l.

0.02 parts by weight, based on the solution, of initiator (1,1′-di-tert-butylperoxy-3,3,5-trimethylcyclohexane) were injected into the mixing reactor (4) through the pipe (5) at room temperature (about 20°C). The resulting mixture was fed, at a flow rate of 1.62 l/h and through a pipe (7), to the head of a vertical tubular reactor (6) of the plug-flow full type, having a total volume of 2.5 l and a length/diameter ratio of 5.

The reactor was divided into 3 identical reaction zones which were thermostated so as to keep the temperature of the reaction mixture inside at the following values:

| | |
|---|---|
| 1st zone: | 115°C |
| 2nd zone: | 130°C |
| 3rd zone: | 140°C |

The reactor (6) was equipped with a stirrer composed of 48 horizontal harms, rotating at 80 rpm.

The residence time of the reaction mixture in the first zone of the reactor (6) was about 35 minutes while the total reaction residence time was about 2 hours. A continuous nitrogen stream (10), at a flow rate of 2 l/h and at a pressure of 0.2 x 10⁵ Pa, and a solution (11) obtained by condensation of the final polymerization bulk coming out of the reactor (6) and composed of 70% by weight of styrene and 30% by weight of ethylbenzene, at a flow rate of 0.05 l/h, were injected into the reactor head (6) near the rupture disk.

The reaction mixture was continuously discharged from the tubular reactor (6) at a flow rate of 1.38 l/h; the solids content of the discharged mixture was 40% by weight. Then the reaction mixture was fed through a gear pump (9) to two vertical tubular reactors (not shown in the figure), identical with the reactor (6) and arranged in series, in which the polymerization was completed under agitation and with increasing the temperature from 130° to 150°C in the first of the two reactors and from 150° to 170°C in the second reactor, until a solids content of about 70% was obtained. The reaction mixture coming out of the second reactor was heated at 240°C in a preheater and depurated from the solvent and from the unreacted nonomers in an evaporator under a vacuum of 10 mm Hg (13,3 mbar).

The polymer discharged from the evaporator had a total volatiles content of 0.08% by weight and its properties are reported in the following table 1.

### EXAMPLE 2

A reaction solution comprising:
6.25 parts by weight of polybutadiene rubber of the medium cis type (BUNA HX529):
7.8 parts by weight of styrene
8.1 parts by weight of ethylbenzene
1.8 parts by weight of paraffin oil, and
0.1 parts by weight of a phenolic antioxidant (IRGANOX® 1076),
was fed continuously, through a preheater (1) and at a temperature of about 95°C and a flow rate of 1.25 l/h, to an agitated reactor (2) of the type employed in example 1. The reaction mixture coming from the head of the tubular reactor (6) at a flow rate of 0.27 l/h was added to said solution.

The resulting solution was fed, at a flow rate of 1.52 l/h and through a gear pump (3), to a second agitated mixing reactor (4).

To said mixing reactor (4), a mixture composed of 5.85 parts by weight of acrylonitrile and 0.02 parts by weight of initiator of example 1 was added at a flow rate of 0.08 l/h.

The resulting mixture was fed to the head of the tubular reactor (6) of example 1 at a flow rate of 1.6 l/h.

The employed temperature profile was:

| | |
|---|---|
| 1st zone: | 110°C |
| 2nd zone: | 124°C |
| 3rd zone: | 136°C |

The residence time of the reaction mixture in the first zone and the total residence time in the reactor (6) were the same as in example 1.

The adopted operative conditions were the same as in example 1 and the solids content of the solution coming out of the reactor (6) was 40% whereas that coming out of the last vertical reactor was 70%.

The characteristics of the high impact copolymer are reported in Table 1.

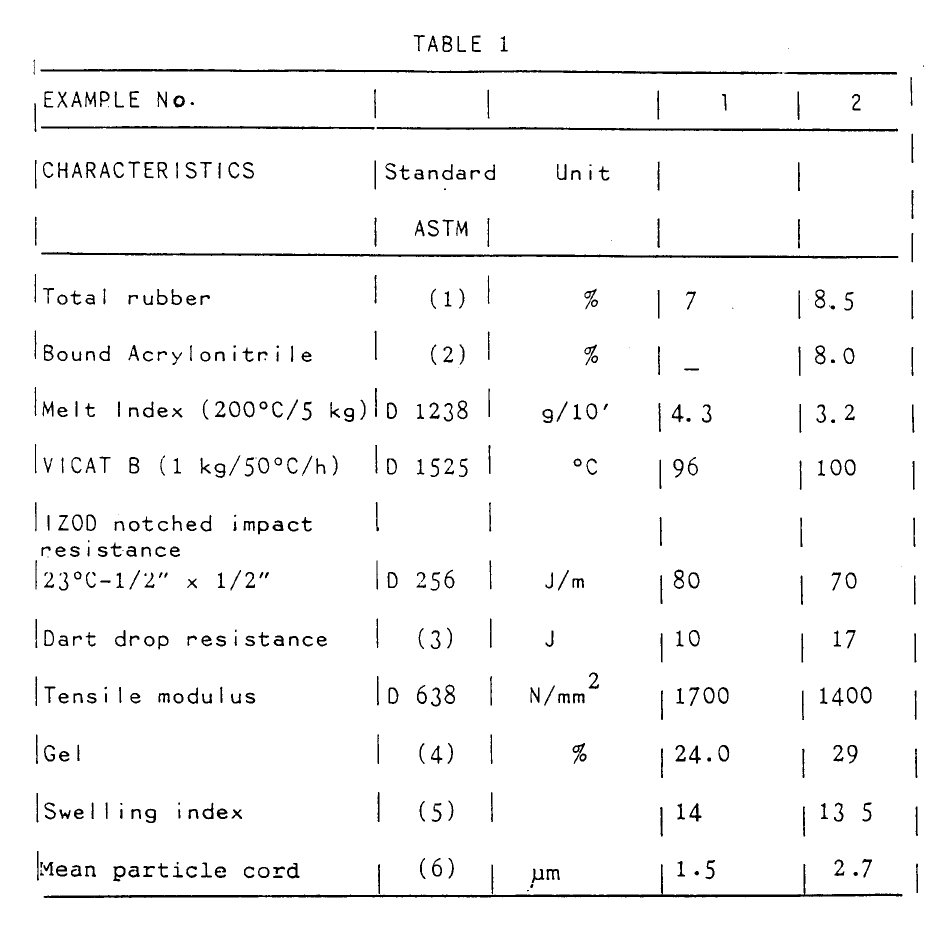

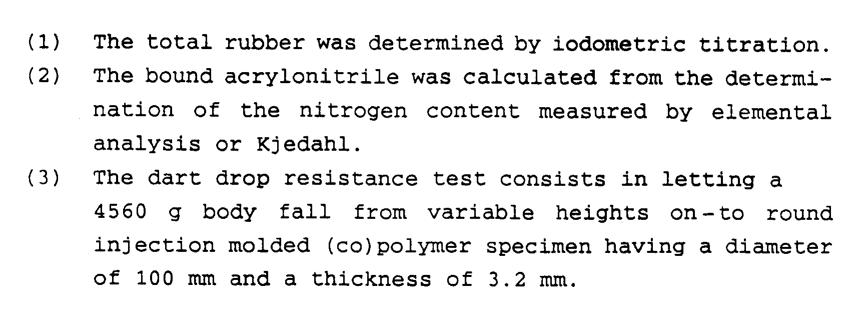

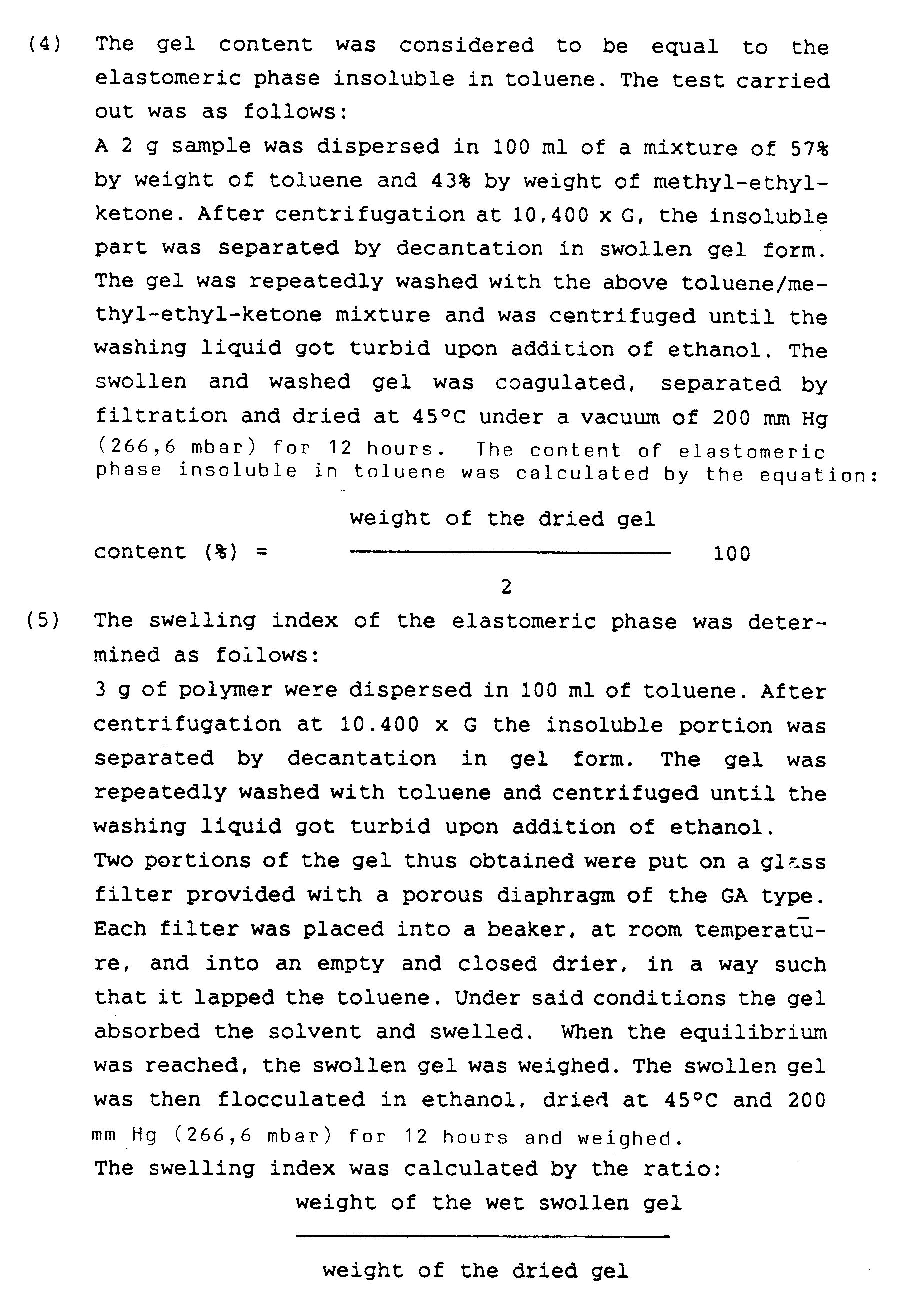

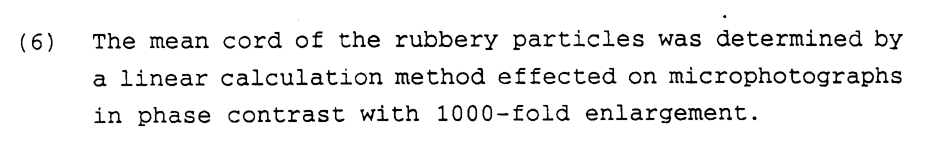

### EXAMPLE 3

A reaction solution comprising:
- 7.0 parts by weight of EPDM rubber of the ethylene/propylene/5 ethylidene-2-norbornene terpolymer type and containing 50% of propylene and 3.5% of ethylidene-2-norbornene and having a Mooney ML 4 viscosity at 100°C of 50;
- 81.25 parts by weight of styrene;
- 10.0 parts by weight of ethylbenzene;
- 1.75 parts by weight of paraffin oil;
- 0.022 parts by weight of tert-dodecylmercaptane (TDM); and
- 0.1 parts by weight of a phenolic antioxidant (Irganox® 1076)
was fed continuously, through a preheater (1) and at a temperature of about 95°C and a flow rate of 1.33 l/h, to an agitated mixing reactor (2) of the type used in example 1.

The reaction mixture coming from the head of the tubular reaction reactor (6) at a flow rate of 0.27 l/h was added to said solution.

The solution was fed, at a flow rate of 1.6 l/h and through a gear pump (3), to a second agitated mixing reactor (4).

Into said reactor (4) 0.04 and 0.05 parts by weight resp., based on the solution, of 1,1'-di-tert-butylperoxy-3,3,5-trimethyl-cyclohexane and di-tert-butylperoxide were introduced through the pipe (5) at room temperature (about 20°C).

The resulting mixture was fed to the head of the tubular reactor (6) described in example 1 at a flow rate of 1.60 l/h.

The employed temperature profile was:

| | |
|---|---|
| 1st zone: | 105°C |
| 2nd zone: | 115°C |
| 3rd zone: | 125°C |

The residence time of the reaction mixture in the first zone of the reactor (6) was about 1 hour while the total reaction residence time was about 3 hours.

The adopted operative conditions were the same as in example 1, with the only exception that the temperatures were 130°C to 140°C in the first of the two reactors and 140°C to 150°C in the second reactor. The solids content of the solution coming out of the reactor (6) was about 40% while that of the solution coming out of the last vertical reactor was about 70%.

The characteristics of the high impact polymer are reported in table 2.

**TABLE 2**

| CHARACTERISTICS | Standard | Unit | |
|---|---|---|---|
| Total rubber | (7) | % | 10 |
| Melt Index (200°C/5 kg) | D 1238 | g/10' | 3 |
| VICAT B | D 1525 | °C | 93 |
| IZOD notched impact resistance 23°C-1/2" x 1/2" | D 256 | J/m | 100 |
| Dart drop resistance | (3) | J | 6 |
| Tensile modulus | D 638 | N/mm² | 1600 |
| Mean particle cord | (6) | »m | 2.9 |
| (7) The total rubber was determined by IR spectrometry. | | | |

## Claims

1. Process for the continuous bulk production of vinylaromatic (co)polymers including a vinylaromatic monomer, rubber and, optionally, a comonomer selected from acrylonitrile, methacrylonitrile, acrylic acid, methacrylic acid and C₁₋₈-alkyl or cycloalkyl esters of said acids, comprising:
a) mixing, at a temperature below 100°C and in one or more mixers, the vinylaromatic monomer, the rubber, the catalyst, in an amount not exceeding 0.1% by weight based on the monomers, the above comonomer, if present, an inert solvent, in an amount not exceeding 20% by weight based on the total mixture, and the (co)polymer formed by said monomers, in an amount not exceeding 10% by weight based on the total mixture;
b) feeding the solution obtained in step a) into the head of an agitated vertical tubular plug-flow reactor divided into three successive zones which zones are heated at different temperatures between 100° and 150°C, at a flow rate higher than that of the mixture coming out of the reactor;
c) recycling the excess solution coming out of the vertical reactor of step b) to the mixer;
d) injecting the solvent, in an amount not exceeding 5% by weight based on the solution, into the top of the vertical reactor;
e) keeping the solution obtained from the first zone of the vertical reactor for a time sufficient to halve the catalyst lifetime, at the temperature of said first zone; and
f) continuing the polymerization in the subsequent zones of the vertical reactor until the solution coming out of the third zone has a solids content of at least 40% by weight.

2. Process according to claim 1, in which the preparation of the solution of vinylaromatic monomer, rubber, catalyst, optional comonomer, solvent and copolymer is carried out in two separate mixers, in the first of which, kept at a temperature not exceeding 100°C, the vinylaromatic monomer, the rubber and the inert solvent are mixed; and in the second reactor, not heated, the catalyst and the comonomer, if present, are added.

3. Process according to any one of claims 1 and 2, in which the rubber is a homopolymer or copolymer of conjugated dienes of from 4 to 6 carbon atoms and has a transition temperature of the second order (Tg) lower than -20°C.

4. Process according to claim 3, in which the rubber is polybutadiene wherein the fraction of cis configuration is higher than 25%.

5. Process according to any one of claims 1 and 2, in which the rubber is a rubbery ethylene-propylene copolymer or an ethylene-propylene-diene terpolymer.

6. Process according to any one of the preceding claims, in which the rubber is employed in amounts of from 1 to 20% by weight, preferably 2 to 15% by weight, based on the initial solution to be polymerized.

7. Process according to any one of the preceding claims, in which the inert solvent is used in amounts of from 5 to 10% by weight, based on the initial solution to be polymerized.

8. Process according to any one of the preceding claims, in which the catalyst is added in amounts of from 0.005 to 0.05% by weight, based on the monomers.

9. Process according to any one of the preceding claims, in which the catalyst is a radical initiator, preferably an organic peroxide.

10. Process according to any one of the preceding claims, in which a chain transfer agent, preferably a mercaptane containing from 4 to 18 carbon atoms, is added to the solution in an amount of from 0.01 to 0.3% by weight based on the vinylaromatic monomer.

11. Process according to any one of the preceding claims, in which the vinylaromatic monomer is styrene or styrene having one or more hydrogen atoms replaced by radicals selected from alkyl, aryl, halogen and nitro groups.

12. Process according to any one of the preceding claims, in which the amount of comonomer ranges from 0 to 50% by weight, preferably 5 to 30% by weight, based on the monomer mixture.

13. Process according to any one of the preceding claims, in which the vertical tubular reactors have a length/diameter ratio of at least 2, preferably of from 3 to 10.

14. Process according to any one of the preceding claims, in which the solvent injected into the top of the reactor comprises solvent recovered by distillation from the polymerization bulk at the end of the process.

15. Process according to any one of the preceding claims, in which the agitated vertical tubular plug flow reactor is provided with a rupture disk and nitrogen or any other inert gas is introduced in the zone below said rupture disk at a pressure of at least 0.1 x 10⁵ Pascal, preferably of from 0.2 x 10⁵ to 1 x 10⁵ Pascal.

16. Process according to any one of the preceding claims, in which the polymerization mixture coming out of the third zone of the vertical reactor is polymerized in one or more, preferably two, successive agitated vertical tubular plug-flow reactors until the solids content is at least 70% by weight, based on the vinyl aromatic monomer, whereafter the mixture is devolatilized.

## Patentansprüche

1. Verfahren zur kontinuierlichen Masseherstellung vinylaromatischer (Co)polymere, einschließend ein vinylaromatisches Monomer, Kautschuk und gegebenenfalls ein Comonomer, ausgewählt aus Acrylnitril, Methacrylnitril, Acrylsäure, Methacyrlsäure und C₁₋₈-Alkyl- oder Cycloalkylestern dieser Säuren, welches umfaßt:
a) Mischen bei einer Temperatur unter 100 °C und in einem oder mehreren Mischern des vinylaromatischen Monomers, des Kautschuks, des Katalysators in einer Menge nicht über 0.1 Gew.-%, bezogen auf die Monomeren, des obigen Comonomers, falls vorhanden, eines inerten Lösemittels in einer Menge nicht über 20 Gew.-%, bezogen auf die gesamte Mischung, und des aus den Monomeren gebildeten (Co)polymers in einer Menge nicht über 10 Gew.-%, bezogen auf die gesamte Mischung,
b) Zuführen der in Schritt a) erhaltenen Mischung in den Kopf eines vertikalen Kolbenstrom-Rohrreaktors mit Rührwerk, der in drei aufeinanderfolgende Zonen aufgeteilt ist, die auf verschiedene Temperaturen zwischen 100 ° und 150 °C erhitzt sind, mit einer Fließgeschwindigkeit, die höher ist als die der aus dem Reaktor kommenden Mischung,
c) Rückführen der überschüssigen, aus dem vertikalen Reaktor des Schrittes b) kommenden Lösung in den Mischer,
d) Injizieren des Lösemittels in den Kopf des vertikalen Reaktors in einer Menge nicht über 5 Gew.-%, bezogen auf die Lösung,
e) Belassen der aus der ersten Zone des vertikalen Reaktors erhaltenen Lösung eine hinreichende Zeit lang, um die Lebenszeit des Katalysators zu halbieren, bei der Temperatur der ersten Zone und
f) Fortsetzen der Polymerisation in den anschließenden Zonen des vertikalen Reaktors, bis die aus der dritten Zone kommende Lösung einen Feststoffgehalt von mindestens 40 Gew.-% besitzt.

2. Verfahren gemäß Anspruch 1, in dem die Herstellung der Lösung des vinylaromatischen Monomers, Kautschuks, Katalysators, gegebenenfalls Comonomers, Lösemittels und Copolymers in zwei separaten Mischern durchgeführt wird, wobei im ersten, der bei einer Temperatur nicht über 100 °C gehalten wird, das vinylaromatische Monomer, der Kautschuk und das inerte Lösemittel gemischt werden und in den zweiten Reaktor, der nicht erhitzt wird, der Katalysator und, falls vorhanden, das Comonomer gegeben werden.

3. Verfahren gemäß irgendeinem der Ansprüche 1 und 2, in dem der Kautschuk ein Homopolymer oder Copolymer konjugierter Diene mit 4 bis 6 Kohlenstoffatomen ist und eine Übergangstemperatur zweiter Ordnung (Tg) unter -20 °C hat.

4. Verfahren gemäß Anspruch 3, in dem der Kautschuk Polybutadien ist, in dem die Fraktion mit cis-Konfiguration größer als 25 % ist.

5. Verfahren gemäß irgendeinem der Ansprüche 1 und 2, in dem der Kautschuk ein kautschukartiges Ethylen-Propylen-Copolymer oder ein Ethylen-Propylen-Dien-Terpolymer ist.

6. Verfahren gemäß irgendeinem der vorhergehenden Ansprüche, in dem der Kautschuk in Mengen von 1 bis 20 Gew.-%, vorzugsweise 2 bis 15 Gew.-%, bezogen auf die zu polymerisierende Anfangslösung, eingesetzt wird.

7. Verfahren gemäß irgendeinem der vorhergehenden Ansprüche, in dem das inerte Lösemittel in Mengen von 5 bis 10 Gew.-%, bezogen auf die zu polymeriserende Ausgangslösung, eingesetzt wird.

8. Verfahren gemäß irgendeinem der vorhergehenden Ansprüche, in dem der Katalysator in Mengen von 0.005 bis 0.05 Gew.-%, bezogen auf die Monomeren, zugesetzt wird.

9. Verfahren gemäß irgendeinem der vorhergehenden Ansprüche, in dem der Katalysator ein Radikalstarter, vorzugsweise ein organisches Peroxid, ist.

10. Verfahren gemäß irgendeinem der vorhergehenden Ansprüche, in dem ein Kettenübertragungsmittel, vorzugsweise ein Mercaptan mit 4 bis 18 Kohlenstoffatomen, der Lösung in einer Menge von 0.01 bis 0.3 Gew.-%, bezogen auf das vinylaromatische Monomer, zugesetzt wird.

11. Verfahren gemäß irgendeinem der vorhergehenden Ansprüche, in dem das vinylaromatische Monomer Styrol oder ein Styrol, in dem ein oder mehrere Wasserstoffatome ersetzt sind durch Reste, ausgewählt aus Alkyl-, Aryl-, Halogen und Nitrogruppen, ist.

12. Verfahren gemäß irgendeinem der vorhergehenden Ansprüche, in dem die Menge an Comonomer im Bereich von 0 bis 50 Gew.-%, vorzugsweise 5 bis 30 Gew.-%, bezogen auf die Monomermischung, liegt.

13. Verfahren gemäß irgendeinem der vorhergehenden Ansprüche, in dem der vertikale Rohrreaktor ein Verhältnis Länge/Durchmesser von mindestens 2, vorzugsweise 3 bis 10, besitzt.

14. Verfahren gemäß irgendeinem der vorhergehenden Ansprüche, in dem das in den oberen Teil des Reaktors injizierte Lösemittel Lösemittel umfaßt, das durch Destillation aus der Polymerisationsmasse am Ende des Verfahrens zurückgewonnen wird.

15. Verfahren gemäß irgendeinem der vorhergehenden Ansprüche, in dem der vertikale Rohrreaktor mit Rührwerk mit einer Berstscheibe ausgestattet ist und Stickstoff oder ein anderes Inertgas in die Zone unter der Berstscheibe bei einem Druck von mindestens 0.1·10⁵ Pa, vorzugsweise 0.2·10⁵ bis 1·10⁵ Pa, eingeleitet wird.

16. Verfahren gemäß irgendeinem der vorhergehenden Ansprüche, in dem die aus der dritten Zone des vertikalen Reaktors kommende Polymerisationsmischung in einem oder mehreren, vorzugsweise zwei, aufeinanderfolgenden vertikalen Kolbenstrom-Rohrreaktoren mit Rührwerk polymerisiert wird, bis der Feststoffgehalt mindestens 70 Gew.-%, bezogen auf das vinylaromatische Monomer, beträgt, worauf die Mischung entgast wird.

## Revendications

1. Procédé pour la production en continu en masse de (co)polymères vinyl-aromatiques contenant un monomère vinyl-aromatique, du caoutchouc et, facultativement, un comonomère choisi parmi l'acrylonitrile, le méthacrylonitrile, l'acide acrylique, l'acide méthacrylique et les esters d'alkyle en C₁₋₈ ou cycloalkyle desdits acides, comprenant les étapes consistant :
a) à mélanger, à une température inférieure à 100 °C, dans un ou plusieurs mélangeur(s), le monomère vinyl-aromatique, le caoutchouc, le catalyseur en une quantité n'excédant pas 0,1 % en poids par rapport aux monomères, le comonomère ci-dessus, si présent, dans un solvant inerte en une quantité n'excédant pas 20 % en poids par rapport au mélange total, et le (co)polymère formé par lesdits monomères en une quantité n'excédant pas 10 % en poids par rapport au mélange total,
b) à envoyer la solution obtenue dans l'étape a) vers la tête d'un réacteur tubulaire vertical agité à écoulement de type piston divisé en trois zones successives qui sont chauffées à différentes températures comprises entre 100 et 150 °C, avec un débit supérieur à celui du mélange sortant du réacteur,
c) à recycler l'excès de solution sortant du réacteur vertical de l'étape b) vers le mélangeur,
d) à injecter le solvant en une quantité n'excédant pas 5 % en poids par rapport à la solution dans la partie supérieure du réacteur vertical,
e) à maintenir la solution obtenue dans la première zone du réacteur vertical à la température de ladite première zone pendant une durée suffisante pour diviser par deux le temps de demi-vie du catalyseur, et
f) à continuer la polymérisation dans les zones suivantes du réacteur vertical jusqu'à ce que la solution sortant de la troisième zone ait une teneur en matières solides au moins égale à 40 % en poids.

2. Procédé conforme à la revendication 1 dans lequel la préparation de la solution de monomère vinyl-aromatique, de caoutchouc, de catalyseur, du comonomère facultatif, du solvant et du copolymère est effectuée dans deux mélangeurs séparés, le premier des deux, maintenu à une température n'excédant pas 100 °C, servant à mélanger le monomère vinyl-aromatique, le caoutchouc et le solvant inerte, et le deuxième réacteur, non chauffé, servant à l'addition du catalyseur et du comonomère lorsque ce dernier est présent.

3. Procédé conforme à une quelconque des revendications 1 et 2 dans lequel le caoutchouc est un homopolymère ou un copolymère de diènes conjugués comportant de 4 à 6 atomes de carbone et a une température de transition vitreuse du second ordre (Tᵥ) inférieure à -20 °C.

4. Procédé conforme à la revendication 3 dans lequel le caoutchouc est le polybutadiène pour lequel la fraction de motifs ayant une configuration cis est supérieure à 25 %.

5. Procédé conforme à une quelconque des revendications 1 et 2 dans lequel le caoutchouc est un copolymère éthylène-propylène caoutchouteux ou un terpolymère éthylène-propylène-diène.

6. Procédé conforme à une quelconque des revendications précédentes dans lequel le caoutchouc est utilisé en des quantités comprises entre 1 et 20 % en poids, de préférence entre 2 et 15 % en poids, par rapport à la solution initiale à polymériser.

7. Procédé conforme à une quelconque des revendications précédentes dans lequel le solvant inerte est utilisé en des quantités comprises entre 5 et 10 % en poids par rapport à la solution initiale à polymériser.

8. Procédé conforme à une quelconque des revendications précédentes dans lequel le catalyseur est ajouté en une quantité comprise entre 0,005 et 0,05 % en poids par rapport aux monomères.

9. Procédé conforme à une quelconque des revendications précédentes, dans lequel le catalyseur est un amorceur radicalaire, de préférence un peroxyde organique.

10. Procédé conforme à une quelconque des revendications précédentes dans lequel un agent de transfert de chaîne, de préférence un mercaptan contenant de 4 à 18 atomes de carbon, est ajouté à la solution en une quantité comprise entre 0,01 et 0,3 % en poids par rapport au monomère vinyl-aromatique.

11. Procédé conforme à une quelconque des revendications précédentes dans lequel le monomère vinyl-aromatique est le styrène ou un styrène dont un ou plusieurs atomes d'hydrogène ont été remplacés par des radicaux choisi parmi les groupes alkyle, aryle, halogéno et nitro.

12. Procédé conforme à une quelconque des revendications précédentes dans lequel la quantité de comonomère est comprise entre 0 et 50 % en poids, de préférence entre 5 et 30% en poids par rapport au mélange de monomères.

13. Procédé conforme à une quelconque des revendications précédentes dans lequel les réacteurs tubulaires verticaux ont un rapport longeur/diamètre au moins égal à 2, de préférence compris entre 3 et 10.

14. Procédé conforme à une quelconque des revendications précédentes dans lequel le solvant injecté dans la partie supérieure du réacteur contient un solvant récupéré par distillation de la masse de polymérisation à la fin du procédé.

15. Procédé conforme à une quelconque des revendications précédentes dans lequel le réacteur tubulaire vertical à écoulement de type piston et muni d'un système d'agitation comporte un disque de rupture et de l'azote ou un quelconque autre gaz inerte est introduit dans la zone en dessous dudit disque de rupture à une pression au moins égale à 0,1 x 10⁵ Pa, de préférence comprise entre 0,2 x 10⁵ et 1 x 10⁵ Pa.

16. Procédé conforme à une quelconque des revendications précédentes dans lequel le mélange de polymérisation sortant de la troisième zone du réacteur vertical est soumise à une polymérisation dans un ou plusieurs, de préférence deux réacteurs tubulaires verticaux à écoulement piston successifs jusqu'à ce que sa teneur en matières solides soit au moins égale à 70% en poids par rapport au monomère vinyl-aromatique puis le mélange est soumis à l'évaporation des composés volatils.
